(19)

Europäisches
Patentamt
European
Patent Office
Office européen
des brevets

(11)  **EP 3 413 270 A1**

(12)  **EUROPEAN PATENT APPLICATION**

(43) Date of publication:
**12.12.2018  Bulletin 2018/50**

(21) Application number: **17305675.5**

(22) Date of filing: **07.06.2017**

(51) Int Cl.:
*G06T 19/20* (2011.01)   *G06K 9/00* (2006.01)
*G06T 3/00* (2006.01)    *G11B 27/031* (2006.01)
*G06T 11/60* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **POULI, Foteini
  35576 Cesson Sévigné (FR)**

• **KERVEC, Jonathan
  35576 Cesson Sévigné (FR)**
• **THIEBAUD, Sylvain
  35576 Cesson Sévigné (FR)**
• **GUERMOUD, Hassane
  35576 Cesson Sévigné (FR)**

(74) Representative: **Vidon Brevets & Stratégie
  16B, rue de Jouanet
  BP 90333
  35703 Rennes Cedex 7 (FR)**

(54)  **DEVICE AND METHOD FOR EDITING A VIRTUAL REALITY SCENE REPRESENTED IN A CURVED SHAPE FORM**

(57)  A virtual reality scene (21) represented in a curved shape form is edited by extracting (11A; 11B) planar key views (24A; 24B) from the virtual reality scene, obtaining (13; 14) edited versions (27A; 27B) of those key views having respective edits, and propagating (15A; 15B) those edits to at least part of the virtual reality scene. In a first mode (1A), the key views are at least partly edited manually, while in a second mode (1 B), they are automatically analyzed (12) and edited (14) based on a user view (22).

Applications to color grading, visual enhancements and special effects.

Fig 1

**(Cont. next page)**

EP 3 413 270 A1

**Fig 2**

**Description**

**1. Technical field**

The invention relates to the domain of Virtual Reality (VR) and regards more particularly editing applied to curved shape representations.

**2. Background art**

In traditional video applications, a common task before processing or editing applications is to identify key frames. Key frames of a video represent a relatively small percentage of frames selected from the complete video, which can for instance mark the beginning or end of a transition or change in the video content. A key frame can also be thought of as a frame representing usually the most salient content of a part of the video (shot). In tasks such as color grading, key frames play an important role, as they allow the artist to focus only on this relatively small number of frames for applying their edits, which are then propagated to the rest of the frames with no manual efforts.

According to known related technologies, a video is first detected and split into shots, which is called shot change detection. This can be effected by evaluating pixels directly, through template matching or by looking at the histograms of subsequence frames. Then, within each shot, a key frame is selected, which can be done either by simply taking a frame at a given position in each shot (e.g. first, last, middle), or by more complex approaches based on frame analysis within each shot. Such methods are described in particular by A. Nasreen and G. Shobha in "Key Frame Extraction from Videos-A Survey", International Journal of Computer Science & Communication Networks, 2013.

In VR, content often takes the form of 360° scenes, in which the viewer can look (or even move) freely around. Such scenes can usually be thought of as cylinders (360° horizontally) or spheres (360° horizontally and vertically), with the viewer placed at a central point. To color grade or edit corresponding content using existing tools and techniques, the 360 degrees of the scene are projected onto a plane, using any of different projections, which introduces very visible distortions to the image if viewed directly. Typically, a sphere is unwrapped towards a rectangular format, related compartments towards the poles of the sphere being stretched while compartments near the sphere equator being more compressed.

As the projected image does not correspond to what a human observer would see in the real scene, it is not appropriate for tasks such as color grading, where artistic decisions are taken based on the depicted scene. At the same time, even if the scene were to be viewed on a VR headset, only one part of the scene would be observed at any time.

In addition, the selection of key frames as practiced for traditional video does not translate well to a VR scene, since viewpoints are directed to a curved continuum, generally constituting a continuous cylinder or sphere.

Consequently, being able to edit a VR scene represented in a curved shape form without being penalized by distortions appears highly desirable.

Also, automatic editing operations on such a VR scene represented in a curved shape form are complex due to the reasons above, and require significant computation resources.

**3. Summary**

A purpose of the present disclosure is to enable convenient editing of a VR scene represented in a curved shape form, including in particular cylinders and spheres, whether involving manual user operations or not.

In the present disclosure, the term "editing" broadly encompasses changes brought to the VR scene, and covers notably color grading, visual enhancements and special effects. In the context of post-production, editing enables e.g. to attribute different looks and feels to different parts of the scene, taking advantage of the spherical, immersive nature of the content.

Applications of the disclosure include in particular post-production and color grading, video on demand where edits or adaptations can be applied on the fly depending both on the device and the content, and VR transmission scenarios (such as through broadcasting, streaming or multicasting) where grading or other edits are applied completely automatically on a display.

In advantageous implementations, the disclosure makes possible the exploitation of existing tools dedicated to traditional video images.

In this respect, an object of the present disclosure is notably a device for editing a virtual reality scene represented in a curved shape form. According to the disclosure, the device comprises at least one processor configured for:

- extracting at least two planar key views from the virtual reality scene,
- obtaining edited versions of those planar key views having respective edits,
- propagating the edits of the edited versions of those planar key views to at least part of the virtual reality scene, called a processed area.

This device makes advantageously possible to select parts of the scene that can be viewed or edited on a planar screen with much less distortion than with global planar projections, and to exploit those parts as proxies, somewhat similar to a traditional process of selecting key frames as proxies for a whole sequence. Also, obtaining those parts consisting in the planar key views advantageously permits the application of traditional editing and color grading approaches.

A "planar key view" refers to a planar view of a portion of the VR scene, i.e. a planar image extracted from the VR scene by a planar projection of a portion of the VR scene represented in its curved shape form. It is advantageously created by projecting points of the surface of that curved shape form representation from a center of projection towards a plane tangential to the curved shape form representation.

When the VR scene has a spherical representation, the planar image is advantageously created by projecting points of the surface of the related sphere from the sphere center towards a plane tangential to that sphere. A gnomonic projection can notably be used in this respect.

Though a planar key view does not belong to the VR scene representation, it is sometimes referred to below as being "part" of the VR scene for sake of conciseness.

The planar key views are advantageously depicting important or representative parts of the VR scene.

In particular implementations, the virtual reality scene is spherical or cylindrical.

In a first category of embodiments, a union of the planar key views and of the processed area covers entirely the virtual reality scene.

This proves convenient in particular for preprocessing or offline applications.

In a second category of embodiments, the processed area is located within at least one current view available to a user in the virtual reality scene.

This can reduce significantly the computational efforts, and is thus more particularly adapted to operations on the fly or online applications. Such solutions take advantage of the fact that contrary to traditional images, in which the whole image needs to be analyzed to calculate appropriate parameters, the whole VR scene is not viewed at the same time.

Advantageously then, only a limited number of the planar key views, such as closest to the available current view, are selected for propagating the edits.

In particular modes, the processed area comprises at least part of the planar key views.

Namely, one or more of the planar key views are then themselves submitted (fully or partly) to further editing, relying on the enforced editing in the planar key views. Such further editing in one of the planar key views is advantageously based on the editing enforced in others of the planar key views. In this way, a smoother result can be obtained in which the edits are enabled to interact between the planar key views.

In alternative modes, only parts of the VR scene complementary to the planar key views are submitted to edit propagation.

Advantageously, the edits correspond to at least one of editing operations among color grading, visual enhancements and special effects.

In particular offline applications, the user can select manually parameters for each of the planar key views, proceed with desired edits and let the device propagate those edits to the whole scene. In particular online applications, which are especially attractive for consumer product exploitation, the editing of the planar key views is itself automatic, so that the whole editing process does not require user involvement.

Accordingly, in advantageous implementations, the processor(s) is/are further configured for automatically editing the planar key views.

Preferably, at least one of the planar key views has a size based on a field of view of a human visual system and/or at least one field of view of one or more display device, such as notably a target virtual reality device and/or a color grading monitor.

That size corresponds then advantageously to a minimum of at least two of those fields of view.

The size can correspond notably to a horizontal and/or vertical dimension, and can be e.g. expressed as an angle of aperture.

In particular implementations, the processor(s) is/are further configured for extracting the planar key views based on a regular sampling of the virtual reality scene.

In other particular implementations, the planar key views correspond to a subset of selected planar key views, that subset being determined by extracting the planar key views from at least two feature clusters associated with the selected planar key views.

Such modes enable to reduce a number of originally selected planar key views, on the ground of desired features. It is then notably possible to extract one of the planar key views from each of the feature clusters.

Feature vectors can notably be determined in the selected planar key views, and those feature vectors be clustered according e.g. to any process well known to a person skilled in the art.

Advantageously, the feature-based approach above is combined with previously obtaining the selected planar key views by regularly sampling the VR scene.

In other particular implementations, which can be combined with the previous ones, the processor(s) is/are further configured for extracting the planar key views based on at least one level of local information chosen among at least one of local contrast, color information such as e.g. saturation, and saliency.

In other particular implementations, which can be combined with the previous ones, the processor(s) is/are further configured for extracting the planar key views based on a concentration of samples associated with brightness levels in said virtual reality scene.

Those implementations can be notably relevant to importance sampling in HDR (High Dynamic Range) applications.

In still other particular implementations, which can be combined with the previous ones, the virtual reality scene being associated with audio signals, the processor(s) is/are further configured for extracting the planar key views based on sound changes.

In still other particular implementations, which can be combined with the previous ones, the virtual reality scene being subject to movements, the processor(s) is/are further configured for extracting the planar key views based on movement intensities.

Advantageously, the virtual reality scene being projection coded as a planar surface, the planar key views are extracted from that planar surface. In a specific implementation thereof, the curved shape form is a sphere and the planar surface is selected among an equirectangular projection and a cube map.

The device advantageously comprises at least one input adapted to receive the virtual reality scene (i.e. corresponding data) and at least one output adapted to output an edited version of the virtual reality scene or of a view available to a user, resulting from propagating the edits.

The disclosure also pertains to an apparatus chosen among a video receiver, a smartphone, a tablet and a virtual reality head-mounted display (HMD) system, comprising a device according to any of the modes of the disclosure.

Another object of the disclosure is a method for editing a virtual reality scene represented in a curved shape form. According to the disclosure, that method comprises:

- extracting at least two planar key views from the virtual reality scene,
- obtaining edited versions of those planar key views having respective edits,
- propagating the edits of the edited versions of those planar key views to at least part of the virtual reality scene, called a processed area.

That method is advantageously executed by a device according to any of the disclosure modes.

In addition, the disclosure relates to a computer program comprising software code adapted to perform a method compliant with any of the above execution modes when the program is executed by a processor.

The present disclosure further pertains to a non-transitory program storage device, readable by a computer, tangibly embodying a program of instructions executable by the computer to perform a method for editing a virtual reality scene, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. List of figures

The present disclosure will be better understood, and other specific features and advantages will emerge upon reading the following description of particular and non-restrictive illustrative embodiments, the description making reference to the annexed drawings wherein:

- figure 1 is a block diagram representing schematically a first mode of a device for editing a virtual reality scene, compliant with the present disclosure;
- figure 2 is a block diagram representing schematically a second mode of a device for editing a virtual reality scene, compliant with the present disclosure;
- figure 3 illustrates the extraction of a single view from a spherical VR scene, as exploited in the device of figure 1 or figure 2;
- figure 4 shows an equirectangular projection of the spherical VR scene of figure 3;

- figure 5 illustrates a scene to camera plane projection as applied for extracting the single view of figure 3 on the ground of the equirectangular projection of figure 4;
- figure 6A and 6B show a cube map projection of the spherical VR scene of figure 3 in a respectively unfolded and folded form;
- figure 7 represents a sampled spherical VR scene according to a first implementation of a device as shown on figure 1 or on figure 2;
- figure 8 represents for a spherical VR scene, a first example of variations of a local contrast averaged per column in function of horizontal degrees, as used in a second implementation of a device as shown on figure 1 or on figure 2;
- figure 9 represents for a spherical VR scene, a second example of variations of a local contrast averaged per column in function of horizontal degrees, as used in the second implementation of a device as shown on figure 1 or on figure 2;
- figure 10 represents for a spherical VR scene, an example of variations of a local contrast averaged per column in function of horizontal degrees, as used in a variant of the second implementation of a device as shown on figure 1 or on figure 2;
- figure 11 is a flow chart showing successive steps executed with the device of figure 1;
- figure 12 is a flow chart showing successive steps executed with the device of figure 2;
- figure 13 diagrammatically shows an AR apparatus comprising the device represented on figure 1 or figure 2.

On the figures, identical or similar elements are designated by the same references.

## 5. Description of embodiments

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

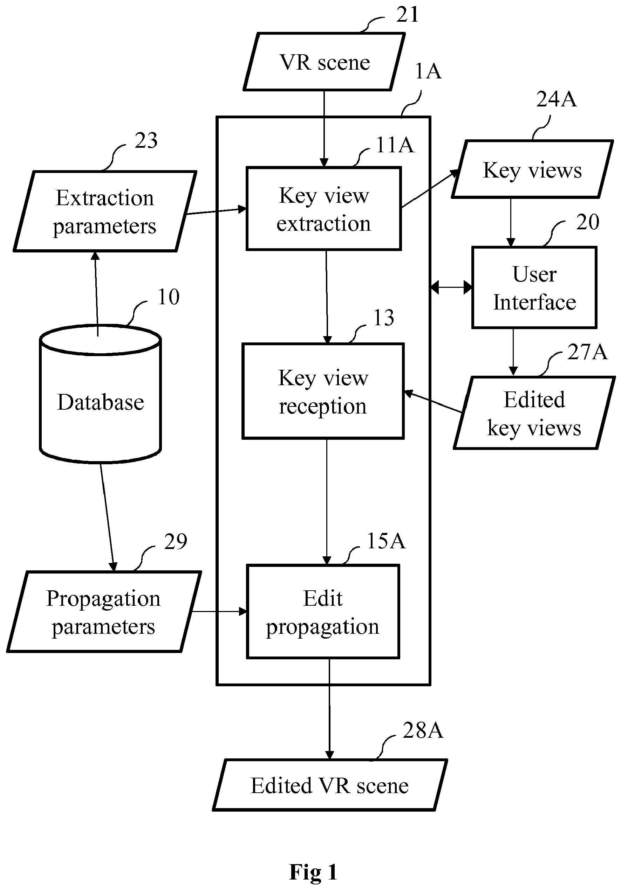

The present disclosure will be described in reference to a particular functional embodiment of a first mode of a device 1A for editing a virtual reality scene, as illustrated on **Figure 1.**

The device 1A is adapted to edit a virtual reality (VR) scene 21 having a curved shape form, such as a 360° sphere or cylinder, so as to produce an edited VR scene 28A. Such an edition can notably consist in color grading, visual enhancements and/or special effects.

The device 1A is advantageously an apparatus, or a physical part of an apparatus, designed, configured and/or adapted for performing the mentioned functions and produce the mentioned effects or results. In alternative implementations, the device 1A is embodied as a set of apparatus or physical parts of apparatus, whether grouped in a same machine or in different, possibly remote, machines.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1 A.

The device 1A comprises a module 11 A for extracting two or more planar key views 24A from the VR scene 21, relying in particular on extraction parameters 23 retrieved from one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). The extraction parameters 23 advantageously include an indicator of the kind of process used in the key view extraction. Also, in particular implementations, that kind of process can be user selected among several options.

Alternatively, the extraction parameters 23 are received from a communication network or directly user entered.

The extraction parameters 23 include advantageously the number of extracted key views 24A, which can e.g. be comprised between 1 and 20, and preferably between 1 and 10. Setting that number to 1 can amount to a global edition corresponding to a traditional method. Also, increasing the number of key views can enhance the editing capacities, subject to additional computation costs.

The extracted key views 24A are obtained from the device 1A for external edition, which can be effected manually, by an automatic process, or by combining manual and automatic operations. In the example represented on Figure 1, the extracted key views 24A are directly available to a user interface 20, via which information can be entered and retrieved by a user. The user interface 20 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The editing operations can be executed by artists on the key views 24A, which can be viewed without projection distortions on a normal display.

Once ready, edited versions 27A of the outputted key views 24A are received from the user interface 20 by a key view reception module 13 of the device 1 A.

In a variant implementation, the extracted key views 24A are directly transmitted to an automatic edition system configured for planar view edition. In this respect, existing methods for automatic image enhancements can be directed applied to the extracted key views 24A, applying parameters depending on the image content. The edited key views are then directly retrieved from that edition system.

The device 1A also comprises a module 15A for propagating edits as applied to the key views 24A and integrated in the edited key views 27A, so as to obtain the edited VR scene 28A. The propagation can use propagation parameters 29 from the database 10, possibly subject to user selection. Alternatively, the propagation parameters 29 are received from a communication network or directly user entered.

Preferably the whole VR scene 21 is affected by the edition, which enables to get a globally edited representation. In particular implementations, the edition is carried out offline, during a pre-processing stage. In this way, the edited VR scene 28A is then available for any user's view during online operations.

This can be suited to a static scene, in which no movements of objects within the VR scene 21 are considered, as well as to a dynamic scene, the device 1A applying advantageously the edition to a set of selected key frames obtained from an animated sequence or shot.

In variant embodiments, the edition propagation regards only part of the whole VR scene 21. This can be useful in particular in case the extent of the VR scene 21 viewable online is restricted. Also, for VR video, different portions of the VR scene 21 may be viewable online by the user at distinct times. Then, the preprocessing edition propagation can be restricted for each instant VR scene to the concerned portions - thereby providing significant computational savings.

The propagation can be effected by interpolation to determine the editing to be applied to the remaining pixels of the VR scene outside the extracted key views 24A. In variant implementations, that editing is also applied to the extracted key views 24A themselves, which are thereby modified by edits executed on others of the extracted key views 24A.

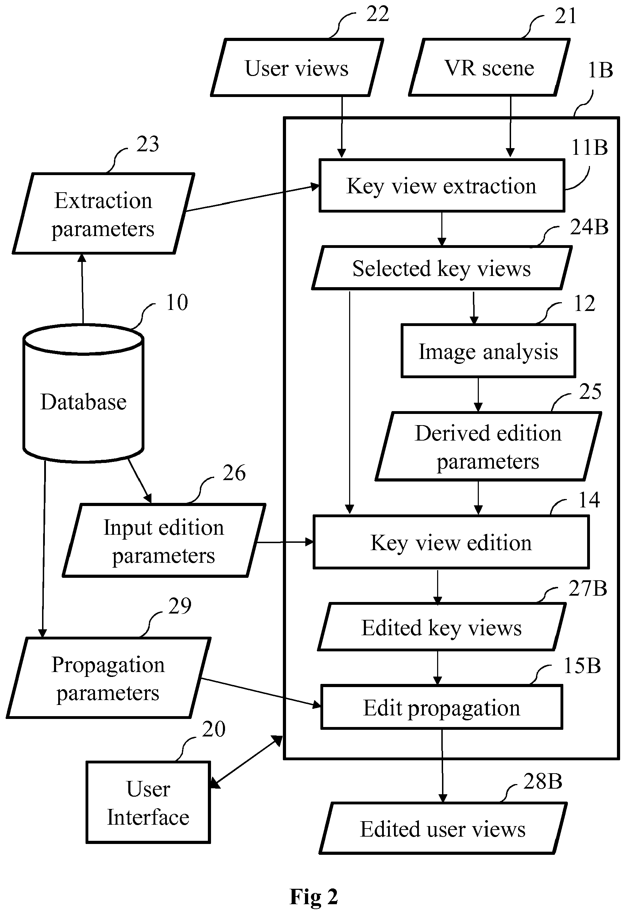

A particular functional embodiment of a second mode of a device 1 B for editing a virtual reality scene is illustrated on **Figure 2.** The device 1 B is advantageously an apparatus, or a physical part of an apparatus, designed, configured and/or adapted for performing the mentioned functions and produce the mentioned effects or results. In alternative implementations, the device 1 B is embodied as a set of apparatus or physical parts of apparatus, whether grouped in a same machine or in different, possibly remote, machines. As previously, the device 1 B further comprises a module 11 B for extracting key views 24B from the VR scene 21 based in particular on extraction parameters 23, and a module 15B for propagating edits as applied to the key views 24B, using propagation parameters 29.

However, one or several user views 22 of the VR scene 21 are further considered, and the propagation module 15B is configured for producing automatically edited versions 28B of those user views 22, without requiring external edition operations. Each of the user views 22 advantageously corresponds to a portion of the VR scene 21 as viewed by an observer at a given point in time, such as notably with a VR headset or a viewer. It depends notably on the respective positions of the observer and viewing apparatus. That user view 22 is close to what would be traditionally visible on a display.

Considering two or more such user views 22 can notably enable to anticipate user eyes movements and/or to have two or more users sharing a same 360° immersive scene, whether through a joint presence in a common surrounding environment or by being connected to a same control device.

In this respect, the extraction module 11 B is adapted to select the key views 24B among a global set of possible key views, in function of the user views 22. In particular embodiments, the selected key views 24B are those closest to the user views 22, e.g. in the horizontal and/or in the vertical directions. In other embodiments, they further include more remote key views, within a predetermined reach around the user views 22. In still other embodiments, the selected key views 24B are determined based on their potential influence on the edition of the user views 22, e.g. most significant color edits. Namely, not only the distance to the user views 22 but also the intensity of the edits are then taken into account.

In a variant implementation, the extraction module 11 B is not in charge of proceeding with a key view selection in function of the user view(s) 22. This is then done at a downstream stage, before significant operations are executed on the key views.

In addition, the device 1 B comprises an image analysis module 12 configured to analyze the contents of the selected key views 24B and to generate edition parameters 25 derived from that analysis, those parameters 25 being relevant to appropriate editions of the selected key views 24B.

The device 1 B further includes an edition module 14 configured for receiving the selected key views 24B and the derived edition parameters 25, together with input edition parameters 26 e.g. from the database 10, and for editing the selected key views 24B so as to produce edited key views 27B. Such an edition can be effected by an automatic image enhancement method, which considers the content of the image in order to determine appropriate parameters.

The propagation module 15B is then adapted to propagate edits as applied to the selected key views 24B, so as to obtain the edited user view(s) 28B.

By contrast with the first mode, the edition operations are then integrated into the device 1 B, and the edition is focused on the user view(s). This second mode is thus particularly suited notably to online exploitation of consumer products.

The user view 22 corresponds advantageously to a view being currently looked at by the user, which permits substantially reduced computation costs for editing that view, based on the selected key views 24B.

In a variant implementation of device 1 B, the set of input user views 22 covers the whole VR scene 21, e.g. by means of a regular partition of the scene. This can lead to a fully automatic system for VR scene edition, though subject to more demanding computation costs (processing time and memory).

Quite interestingly in both modes, the key views 27A and 27B can be treated as equivalent to frames of a video, and edited in a similar way.

More details are provided below about the extraction operations executed by extraction module 11 A, 11 B. Advantageously, the module 11 A, 11 B is adapted to first select several points which serve as respective centers of key views to be extracted. Dependent on the embodiments, those points are selected either by regularly sampling the VR scene 21, or by analyzing the complete VR scene and selecting areas that conform to particular characteristics.

The VR scene analysis and the criteria for key view extraction can be chosen in function of targeted applications. In particular, for a dynamic VR scene, temporal information can play an active role in extracting the key views 24A, 24B, advantageously either in the form of motion or in the form of audio.

Once center points are selected, the extraction module 11A, 11 B is adapted to extract planar key views from the related representation, e.g. from a 360° VR sphere. To determine degrees of visual angle horizontally and vertically covered by those key views, several aspects can be considered, including:

- capabilities and a visual field of the human visual system;
- a target VR viewing device and a field of view (FoV) covered by its display;
- a target color grading monitor and its FoV.

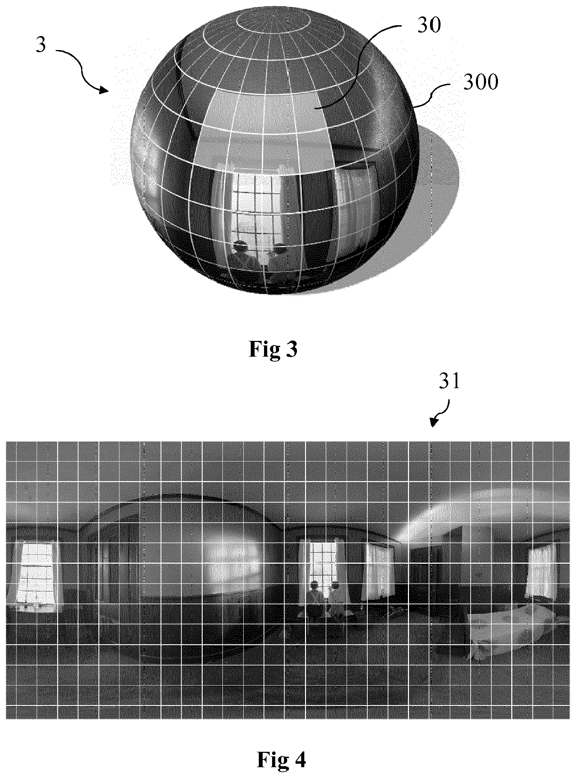

The process for extracting a key view is now detailed in an example, in relation with **Figures 3 to 5.** As represented on **Figure 3,** a view 30 corresponding to a planar image needs to be extracted from a spherical VR scene 3 represented on a sphere 300 (for sake of illustration only, the view 30 is magnified with respect to generally exploited key views; it is presently e.g. turned towards a ceiling).

To extract the view 30 from the sphere 300, the following pieces of information can be exploited:

- camera position - considered at the center of the sphere 300;
- camera viewpoint - corresponding to a center of the view 30 and given as spherical coordinates;
- camera field of view - in horizontal and vertical degrees;
- camera projection model - describing how a point in the sphere 300 is projected to the camera plane.

In addition, the spherical VR scene 3 is encoded into a planar image format using a map projection. In particular implementations, an equirectangular projection 31 is used, as visible on **Figure 4,** the sphere 300 being unwrapped towards a plane. In this projection, the whole spherical scene 3 is visualized within a single planar image that can be viewed on a normal display. It should be noted that different parts of the scene 3 obtain different amounts of deformation: the center part corresponding to the equator of the sphere 300 has less deformation, while the poles obtain more distortion. However, the distortion is horizontal only, since parallel vertical lines remain parallel. Additionally, the horizontal coordinate provides the latitude on the sphere 300.

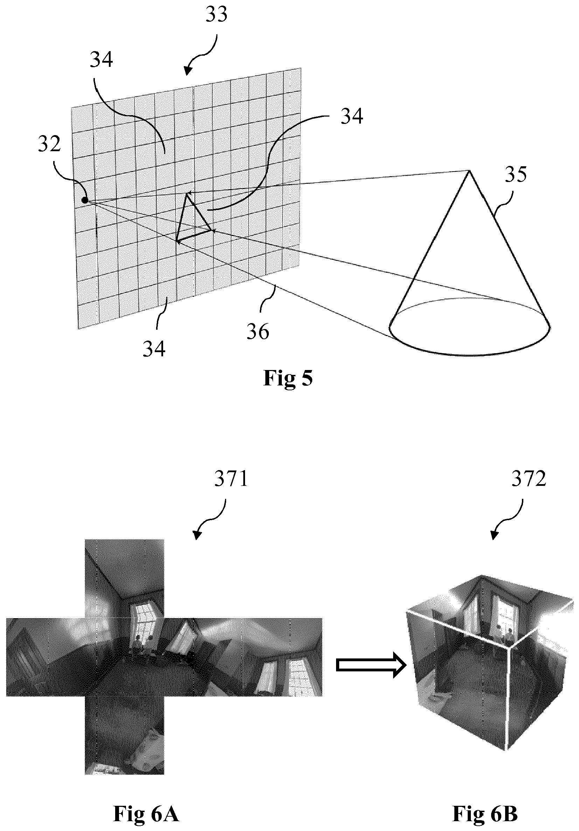

Extracting the view 30 from the sphere 300 amounts to a standard ray tracing problem, about which more details can be found for example in the article by R. Szeliski, "Computer vision: algorithms and applications", *Springer Science & Business Media,* 2010. In practice, as visible on **Figure 5:**

- a canvas (plane) 33 formed of a grid of pixels 34 is defined relative to a hypothetical camera focal point (center of projection) 32, representing an image plane to be extracted, with a desired resolution;
- for each pixel 34 in this canvas 33, a line 36 is extended from the center of projection 32 through that pixel 34 towards a surface of a 3D object 35, present in the scene 3 represented by the sphere 300; at an intersection point of that line 36 with the surface of the sphere 300 (which coincides with the surface of the 3D object 35), a value is obtained and attributed to that pixel 34;
- the same operation is repeated for all pixels 34 in the canvas 33 until the whole image is obtained.

A mapping between the sphere 300 and an individual planar view is thereby obtained. Additional steps are required for getting the mapping between the individual planar view (canvas 33) and the equirectangular projection 31. To obtain planar coordinates $(x, y)$ in that equirectangular projection 31 from spherical coordinates on the sphere, given by the longitude $\lambda$ and latitude $\phi$, the following equations apply:

$$x = (\lambda - \lambda_0) \cos \phi_1 \qquad (1)$$

$$y = \phi - \phi_1 \qquad (2)$$

where $\lambda_0$ is a central meridian and $\phi_1$ is a standard parallel, which in the case of an equirectangular projection is set to 0°.

The inverse projection, i.e. for obtaining latitude and longitude on the sphere 300 from a given position in the equirectangular projection 31, is given by:

$$\lambda = \frac{x}{\cos \varphi_1} + \lambda_0 \qquad (3)$$

$$\phi = y + \phi_1 \qquad (4)$$

In order to get the user view(s) 22, which can be extracted from the sphere 300 at each point of time depending on the viewer orientation, it can be proceeded as described above in obtaining the extracted views 24A, 24B.

Various implementations of the device 1A or the device 1B, in relation with the extraction module 11A, 11B, will now be described. In what follows, it should be kept in mind that in the second mode corresponding to the device 1B, only selected ones of the obtained key views are possibly kept as the effectively exploited key views 24B. That selection among the key views may be effected together with the extraction, or at a later stage. Anyway, for sake of convenience only, the notation 24B is generally used below together with 24A for designating the extracted key views, notwithstanding potential selection among them.

5.1 - Key view selection through regular sampling

In a first set of implementations, the VR scene 21 is sampled in a regular manner in order to select the key views 24A, 24B. More precisely, sampling angular distances $\theta_h$ and $\theta_v$ are determined respectively in the horizontal and vertical directions. In particular modes, those angular distances are derived from the fields of view (FoV) of the human visual system $f_{hsv}$, of the target VR device $f_{VR}$, and of the color grading monitor to be used $f_c$, each expressed in degrees of horizontal and vertical visual angles, by the smallest of those three parameters ($f_{hsv}$, $f_{VR}$, $f_c$). That selection avoids over-sampling the VR scene 21.

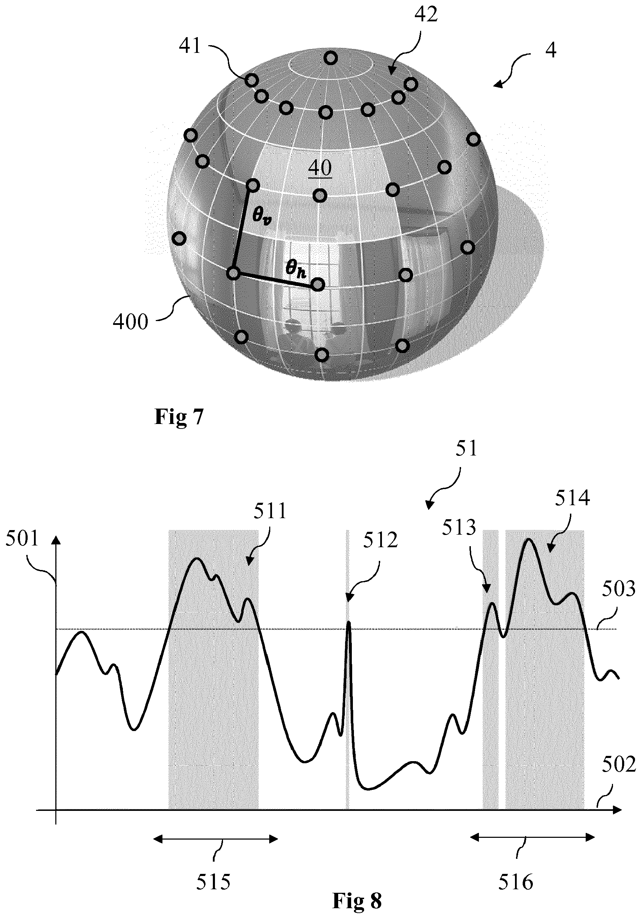

As illustrated in an example on **Figure 7,** a sphere 400 representing a VR scene 4 is sampled every $\theta_h$ and $\theta_v$ degrees (sampling 42), defining sampling points 41 that constitute the centers 41 of key views 40 to be extracted. Using a desired camera model, which can be specified by the user, and by placing a virtual camera at the center of the sphere 400, the key views 40 can be extracted for each of the sampling points 41.

5.2 - Key view selection based on local information

In a second set of implementations, local information from the VR image is used to guide where key views are placed (rather than regularly sampling the VR scene like in the first set of implementations). That local information can regard notably an amount of local contrast, saturation or saliency, or frequency information. Advantageously, a first related step consists in extracting a map of the same size as the VR image, which encodes the particular local information.

That second set of implementations will be detailed below in relation with local contrast, which is just an example of local information that can be exploited in key view selection.

Contrast information in a scene plays a key role for guiding viewers' attention towards different parts of the scene. In fact, the human visual system perceives scenes mostly in terms of contrast rather than direct luminance information. As such, areas of higher local contrast are likely to attract viewer attention more than flatter, lower contrast areas.

Additionally, considering a color grading process, nearby views with large contrast between them are likely to require different treatments. One can consider for example an actor coming out of a dark forest into bright sunlight or a clearing: the view behind the observer might show the forest, making desirable a gloomy, darker look and style of color grading, while in front of the observer, a brighter, happier style might be appropriate.

Based on the above, the positions of the key views 24A, 24B are advantageously determined by selecting areas of higher local contrast using the following steps:

- unwrap the VR scene 21 (e.g. spherical) towards a planar image *I* using any conventional projection, e.g. an equirectangular projection;
- compute a local contrast map C using any known local contrast measure; in a particular implementation, the Michelson contrast is used, which for a pixel *p* in the planar image *I* is defined as:

$$C(p) = \frac{\max\left(I_{w(p)}\right) - \min\left(I_{w(p)}\right)}{\max\left(I_{w(p)}\right) + \min\left(I_{w(p)}\right)} \qquad (5)$$

where $I_{w(p)}$ represents a window of width *w* centered around pixel p;
- detect *n* points in *C* using one of the following strategies:

(a) select points corresponding to views that maximize the local contrast;
(b) select points corresponding to views with large contrast transitions between them.

Those two strategies associated with the second set of implementations, are developed hereinafter.

5.2.1 - Local contrast maximization at selected key views

In one embodiment, a spherical VR scene 21 is considered horizontally only by collapsing the vertical dimension. In most VR scenes, this makes sense as the scene is arranged horizontally around the sphere equator, while the poles represent the "floor" and "ceiling" of the scene and therefore carry less salient information. Given an equirectangular image, the local contrast *C* is averaged over each column, leading to a single local contrast value for each horizontal degree.

A contrast threshold value $\tau_c$ is defined by the user or set to a default value. The threshold $\tau_c$ can notably be set to a percentage of the maximum contrast in the scene, e.g.: $\tau_c$ = 0.7 x max($C$). The higher the percentage, the fewer selected key views 24A, 24B.

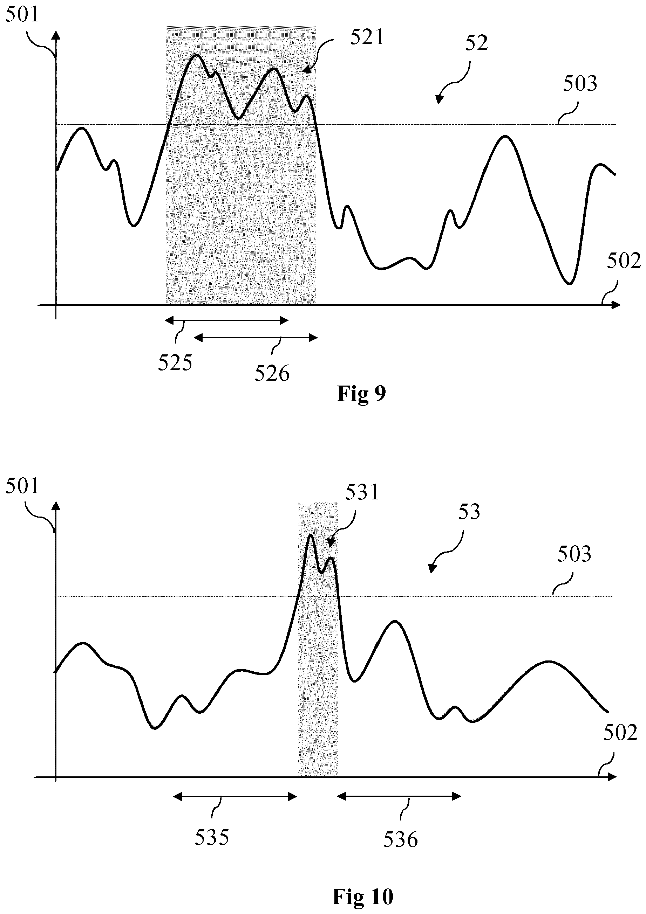

According to the threshold $\tau_c$, several continuous regions of horizontal degrees are identified, corresponding to areas where local contrast exceeds the threshold $\tau_c$. This is illustrated on **Figures 8 and 9,** representing the local contrast averaged per column (axis 501) in function of the horizontal degrees (axis 502), while taking account of a threshold line 503 associated with the threshold value $\tau_c$. Continuous areas 511, 512, 513 and 514 of a first contrast curve 51 **(Figure 8)** and area 521 of a second contrast curve 52 **(Figure 9)** are thus identified above the threshold line 503.

In addition, a key view FoV for the horizontal direction, noted $\theta_h$, is determined in degrees, following a process similar to the first set of implementations (i.e. the minimum between the observer, VR device and grading monitor FoVs). The continuous ranges of high local contrast, i.e. above the threshold $\tau c$, are then processed as follows:

- if a region is smaller than the key view FoV $\theta_h$ and larger than a minimum threshold $\theta\ min,$ one of the key views 24A, 24B is positioned, centered at a centroid of that region; the centroid is considered as the weighted average according to the local contrast; on the first contrast curve 51, this is the case of key view 515 with respect to the area 511;
- if a region is smaller than the minimum threshold $\theta_{min}$ and no other region is near it, it is ignored; on the first contrast curve 51, this is the case of the area 512;
- if a region is larger than the key view FoV $\theta_h$, two or more key views are extracted from that region, evenly spaced such that the complete region is covered; on the second contrast curve 52, this is the case of key views 525 and 526 with respect to the area 521;
- if multiple nearby regions fit within a single key view, they are considered together, even if some of them are smaller than the minimum threshold $\theta_{min}$; this is the case of key view 516 with respect to the areas 513 and 514.

In the above variant, the selected key views 24A, 24B are centered on the equator of the sphere.

In another embodiment, the spherical VR scene 21 is handled fully, and not only horizontally after vertical averaging. In this respect, a corresponding equirectangular image is advantageously processed for extracting the target characteristic, e.g. contrast in the present example. According to one possible implementation:

- a map of the characteristic to be analyzed, e.g. contrast, is created by analyzing the equirectangular image;
- a threshold is applied to the map according to a user-defined threshold, so as to obtain a binary map where areas above the threshold are set to 1, otherwise pixels are set to 0 (or the contrary);
- nearby components (having a same binary value) are grown so as to be connected;
- a centroid is found for each of the resulting components;
- key views are extracted so as to be centered on each of the component centroids.

### 5.2.2 - Local contrast maximization between selected key views

In an alternative embodiment for selecting the key views 24A, 24B based on local characteristics of a VR image, e.g. contrast, the key views 24A, 24B are positioned such that they cover areas where the measured characteristic is relatively constant, while ensuring that both sides of a large transition are covered. For example, if there is a bright part of the VR scene 21 next to a shadowed part, the strategy described above with contrast maximization at selected key views would position a key view at the transition point, since the local contrast would be maximal there. In the present alternative embodiment, on the contrary, one key view is placed in the dark part and another one in the bright part.

This is illustrated on **Figure 10,** showing a third contrast curve 53 with the local contrast averaged per column (axis 501) in function of the horizontal degrees (axis 502), while taking account of the threshold line 503 associated with the threshold value $\tau_c$. While a continuous area 531 is identified above the threshold line 503 (high contrast transition), a first key view 535 is located below the area 531 and a second key view 536 is located above the area 531.

### 5.2.3 - Key view selection based on saliency

Another mode of the second set of implementations is developed below, based on saliency information - as computed e.g. from equirectangular projection 31.

Saliency methods analyze the information in an image and provide a map that predicts where a viewer is likely to look in the image. A method for calculating a saliency map for a VR image encoded in an equirectangular format is for example described by V. Sitzmann et al. in "Saliency in VR: How do people explore virtual environments?", arXiv:1612.04335, 2016.

Once the saliency map is obtained, key view centers are placed on areas in the image identified as most salient. For example, a binary map is computed from the saliency map on the basis of a user-defined threshold level, such that regions with saliency higher than that threshold level obtain a value of 1, while the rest of the pixels in the binary map are set to 0. The binary map can be further processed to identify connected components, leading to newly delineated components. The latter are labeled such that each component not connected to others obtains a different label.

Initial key view centers can be placed at a center of each identified component after the connection stage. These can be further refined by eliminating small components that are isolated or by merging components that are near each other.

5.3 - Key view selection based on local movement

In VR scenes, even if the scene is globally static and the observer is only able to rotate within it, it is possible that parts of the scene are moving, such as characters or objects. In such cases, it can be expected that the viewer's attention and gaze is likely attracted towards such parts of the scene. Consequently, parts of the scene where local motion takes place deserve being handled explicitly by an artist or by an automatic system.

In a third set of implementations, to extract the key views 24A, 24B according to local motion in the VR scene 21, a complete sequence or shot is considered, including $n$ frames $f_1...f_n$, each forming advantageously a 360° scene. For each pair of consecutive frames $f_i$ and $f_{i+1}$, a motion map $m_i$ is computed, using any known estimation method, such that pixels with no movement obtain a value of 0, while pixels with movement obtain values larger than 0, relative to the magnitude of the movement.

In particular embodiments, only motion magnitude is considered, and not motion direction. In variants, motion direction is further taken into account, e.g. by favoring directions over others through appropriate weighting.

Per-frame motion maps $m_1...m_n$ are averaged to obtain a single motion map $M$ for the whole sequence. The key views 24A, 24B are then extracted by analyzing the motion map $M$ to locate areas with higher movement. This can be achieved by treating $M$ horizontally only, or by analyzing a complete sphere. A process similar to the one exploited in the second set of implementations relying on the contrast or other local characteristics is advantageously used for extracting the key views 24A, 24B, on the ground of the motion map $M$ (instead of e.g. the contrast map $C$). In this respect, a motion threshold $\tau m$ is set.

5.4 - Key view selection using Importance Sampling for HDR

In a fourth set of implementations, the VR scene 21 is of a higher than normal dynamic range of luminance, corresponding to HDR (for High Dynamic Range) applications. It is then advantageously taken advantage of importance sampling methods used in the context of image-based illumination in computer graphics rendering.

Such importance sampling methods determine how to optimally position a relatively small number of sample points within an image, such that the illumination information within it is accurately captured. The goal of such methods is to minimize the required number of samples necessary when rendering synthetic objects illuminated by a real scene, while preserving a realistic appearance. To achieve that, a larger number of points is generally allotted to brighter parts of the scene, insofar as such areas are more likely to contribute to the appearance of the illuminated rendered objects. Those methods are particularly appropriate when used with HDR images because the illumination is accurately captured, as opposed to images of low dynamic ranges (such as with uniform sampling) where bright parts may be clipped. An importance sampling method, the Median Cut approach, is for example described by P. Debevec in "A median cut algorithm for light probe sampling", *ACM SIGGRAPH classes,* 2008.

According to the fourth set of implementations, a number of samples s is assigned to the VR scene 21. The key views 24A, 24B are then extracted based on concentrations of samples resulting from the importance sampling process, advantageously so as to maximize those concentrations within the key views 24A, 24B.

5.5 - Clustering based selection

In a fifth set of implementations, key views are first extracted by e.g. regularly sampling the VR scene 21, as described above for the first set of implementations. Then, the steps below are followed to select a subset of key views 24A, 24B:

- visual features are calculated for each VR view issued from the regular sampling of the VR scene 21, those features being e.g. obtained by a normalized histogram based on color or by a Histogram of Oriented Gradients (HOG); a final feature per VR view is composed by one visual feature, a weighted linear combination of several visual features, or another combination of such visual features (e.g. non-linear); for example, considering the color histogram of a VR view $i$ given as vector $Hcolor_i$ and the HOG histogram $HOG_i$, a feature vector $FV_i$ for that view is given by:

$$FV_i = \alpha_1 \times Hcolor_i + \alpha_2 \times HOG_i \qquad (6)$$

- a K-means clustering is applied to the feature vectors of all VR views computed in the previous step; namely, a given small number $k$ of clusters is constructed and each of the VR views is assigned to one of the clusters according to its feature vector, advantageously such that the distance between feature vectors within any same cluster is minimized:

$$argmin \ \sum_{i=1}^{k} \sum_{FV_j \in FV} \left\| FV_j - \mu_i \right\|^2 \qquad (7)$$

where $\mu i$ is the barycenter of the $i^{th}$ cluster;

- in a final step, a single representative key view is selected for each of the clusters, resulting in $k$ key views; the key view of a given cluster $i$ is advantageously selected such that it corresponds to the VR view that has the feature vector $FV_i$ closest to the barycenter $\mu_i$ of the $i^{th}$ cluster; those key views are the ones 24A, 24B selected in the process.

Instead of the K-means clustering, any other method allowing to cluster data, as well known to a person skilled in the art, can be used.

5.6 - Sound based selection

In a sixth set of implementations, it is considered that surround sound is available, which enables to analyze audio information. Knowing the intensity and direction of audio, strong changes in sound are identified and the key views 24A, 24B can be extracted from the VR scene 21 at appropriate related directions.

The interest of those implementations is based notably on the following observations. Unlike traditional content, in VR scenes, users do not see the whole scene at any one time. Instead, they have to look around to observe it. As such, saliency or movement may not necessarily attract their attention, since they are not necessarily in their field of view: a moving object behind an observer will simply not be perceived. In contrast to visual information however, the sound information in the content can be perceived irrespective of the observer's viewpoint. As such, it can be expected that audio cues coming from behind the users are able to attract their attention to previously invisible parts of the scene.

Additional precisions will now be given about the selection of the key views 24B in the device 1 B, taking account of the user view(s) 22. Given one of the user views 22, which can be for example determined according to where the user is looking at within the VR scene 21, key views nearest to the user view 22 are advantageously selected among the ones obtained by any of the sets of implementation above (hereinafter candidate key views).

In particular embodiments where the candidate key views are distributed only in the horizontal direction, it is first checked whether the user view 22 corresponds exactly to any particular candidate key view. If yes, the latter is selected and subject to the desired edits. Otherwise, two closest candidate key views are determined respectively on the right (going clockwise) and on the left (going anti-clockwise) of the user view 22, and are exploited as the selected key views 24B for interpolating edits from those right and left key views to the considered user view 22.

In other embodiments involving both the horizontal and vertical directions, several nearby views are kept as the selected key views 24B and exploited for interpolations. They can be taken notably as all the candidate key views within a fixed radius from the user view 22.

Additional precisions are given below about the propagation module 15A, 15B. Once edits are effected on the extracted key views 24A, 24B, those edits are propagated through interpolation to determine the editing to be applied to the remaining pixels of the VR scene 21 outside the extracted key views 24A, 24B. In various embodiments, this takes the form of parameters determined automatically or manually and attributed to each of the key views 24A, 24B. The interpolation can be based on any known method that can interpolate data on a regular or irregular grid. For example, it can be referred to the article by K. Anjyo, J.P. Lewis and F. Pighin, "Scattered Data Interpolation for Computer Graphics", *SIGGRAPH 2014 Course Notes, ACM SIGGRAPH*, 2014.

More particularly for the device 1 B involving the user views 22, it can be proceeded as follows:

- if the considered user view 22 corresponds exactly to any of the candidate key views, the latter has been selected as the extracted key view 24B and a corresponding editing parameter $p_i$ is applied to the image defined by the extracted key view 24B;
- otherwise, in case the distribution of the candidate key views is made only in the horizontal direction, two nearest key views 24B have been detected among the candidate key views, one going clockwise and denoted $V_{right}$, and another going anticlockwise and denoted $V_{left}$; a difference in degrees is then calculated between the current user view 22, noted $u$, and $V_{right}$, namely $\alpha = V_{right} - u$ (difference between the view centers); considering parameter values $p_{right}$ and $p_{left}$ corresponding respectively to $v_{right}$ and $v_{left}$, a new parameter $p_u$ is then computed using

$$\beta = \frac{\alpha}{v_{right} - v_{left}}$$

as an interpolation weight, i.e.:

$$p_u = (1 - \beta)\, p_{right} + \beta\, p_{left} \tag{8}$$

and this interpolated parameter $p_u$ is applied to the image corresponding to view $u$;
- otherwise, in case the distribution of the candidate key views is made in both horizontal and vertical directions, several nearby views have been selected, and an interpolation method is executed as generally mentioned above.

Propagating the edits from the extracted key views 24A, 24B can be applied not only to the pixels of the VR scene 21 outside the key views 24A, 24B, but also in some embodiments to the key views 24A, 24B themselves. In this way, the edits carried out on one of the key views 24A, 24B can be propagated to the other key views 24A, 24B.

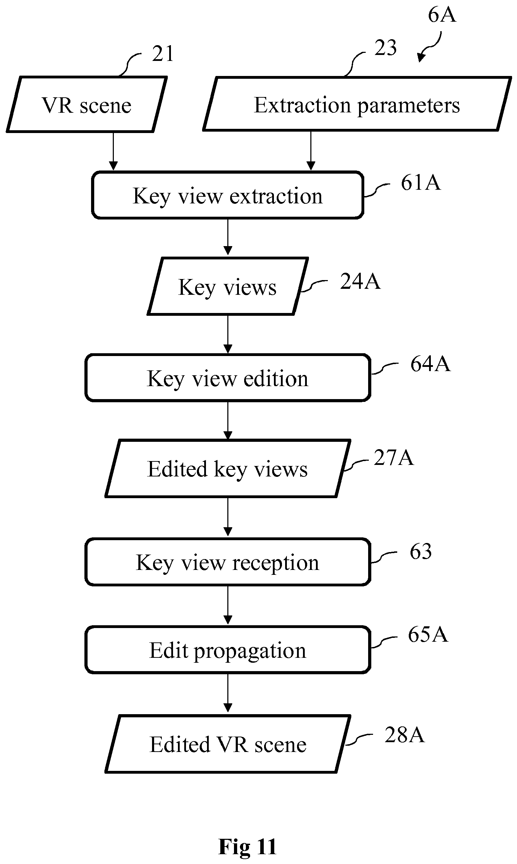

In execution, as illustrated on **Figure 11,** the device 1A proceeds preferably as follows in editing the VR scene 21. The key views 24A are extracted at step 61A on the ground of the input extraction parameters 23. They are then edited (outside the device 1 A) at step 64A, producing the edited key views 27A. The latter are received by the device 1A at step 63 and exploited for edit propagation over the whole or part of the VR scene 21 at step 65A, thereby giving the edited VR scene 28A.

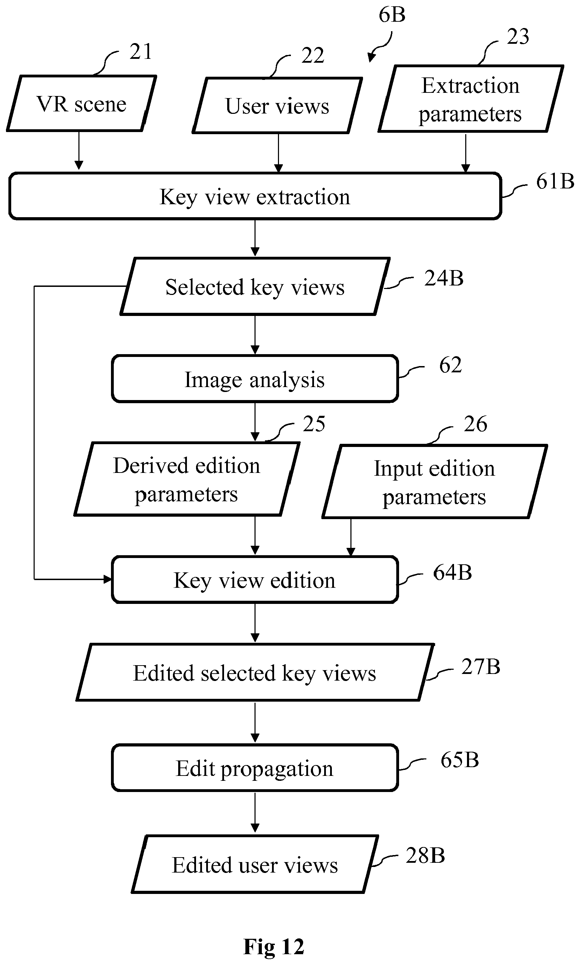

As for the method executed with the device 1 B in editing the VR scene 21, as illustrated on **Figure 12,** the selected key views 24B are extracted at step 61 B on the ground of the extraction parameters 23 and the considered user view(s) 22. Those selected key views 24B are submitted to an image analysis at step 62 providing the derived edition parameters 25. The edition of the selected key views 24B is then carried out at step 64B, using the derived edition parameters 25 and the input edition parameters 26. This yields the edited selected key views 27B, which are exploited for edit propagation to the user view(s) 22 at step 65B, thereby giving the edited user view(s) 28B.

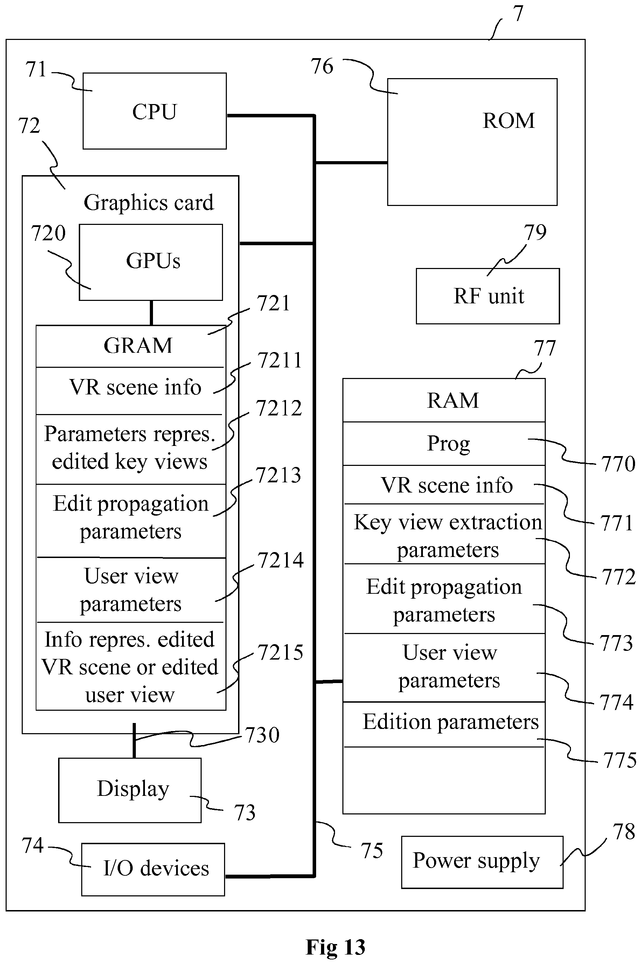

A particular apparatus 7, visible on Figure 13, is embodying the device 1A or 1 B described above - in advantageous implementations, the apparatus 7 includes the functionalities of both devices 1A and 1 B. It corresponds for example to a tablet, a smartphone, a head-mounted display (HMD), or a games console - such as a specialized games console producing and displaying images live.

Advantageously, the apparatus 7 is adapted to 360° immersive display, such as notably an HMD or a centralized picoprojector set. In alternative implementations, the apparatus 7 has instead a limited FoV (e.g. a tablet) while being adapted to visualize pieces of a full 360° scene when rotated around a user.

That apparatus 7 is suited to virtual reality. In some implementations, it is alternatively or also relevant to augmented reality (AR), whether for direct view (the user is typically viewing the real 3D scene through a glass), indirect view (the user is viewing the real 3D scene displayed on a screen), or both. AR applications refer to a live view of a real-world environment whose elements are augmented by computer-generated (CG) content, such as video or graphics. In the present disclosure, AR further encompasses Mixed Reality (MR), in which the CG content further interacts with the real-world environment, and digital and physical realities seamlessly blend together. In some AR embodiments of the apparatus 7, portions of the edited VR scene 28A or of the edited user view 28B are mixed with live views of the real-world environment.

The apparatus 7 comprises the following elements, connected to each other by a bus 75 of addresses and data that also transports a clock signal:

- a microprocessor 71 (or CPU) ;
- a graphics card 72 comprising several Graphical Processor Units (or GPUs) 720 and a Graphical Random Access Memory (GRAM) 721;
- a non-volatile memory of ROM type 76;
- a RAM 77;
- one or several I/O (Input/Output) devices 74 such as for example a keyboard, a mouse, a joystick, a webcam; other modes for introduction of commands such as for example vocal recognition are also possible;
- a power source 78 ; and
- a radiofrequency unit 79.

The apparatus 7 also comprises a display device 73 of display screen type directly connected to the graphics card 72 to display synthesized images calculated and composed in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, a display device is external to apparatus 7 and is connected thereto by a cable or wirelessly for transmitting the display signals. The apparatus 7, for example through the graphics card 72, comprises an interface for transmission or connection adapted to transmit a display signal to an external display means such as for example an LCD or plasma screen or a video-projector. In this respect, the RF unit 79 can be used for wireless transmissions.

In an alternative implementation, the display device 73 corresponds to a glass through which the user is seeing the real environment, and the apparatus 7 further comprises an optical projection system (not represented), which enables to project e.g. generated virtual images or contents on the glass.

It is noted that the word "register" used in the description of memories 721 and 77 can designate in each of the memories mentioned, a memory zone of low capacity (some binary data) as well as a memory zone of large capacity (enabling a whole program to be stored or all or part of the data representative of data calculated or to be displayed). Also, the registers represented for GRAM 721 can be arranged and constituted in any manner, and each of them does not necessarily correspond to adjacent memory locations and can be distributed otherwise (which covers notably the situation in which one register includes several smaller registers).

When switched-on, the microprocessor 71 loads and executes the instructions of the program contained in the RAM 77.

The random access memory 77 comprises notably:

- in a register 770, the operating program of the microprocessor 71;
- in a register 771, information representative of a VR scene (for example models of the object(s) of the scene and lighting parameters);
- in a register 772, parameters for extracting key views;
- in a register 773, edit propagation parameters;
- in a register 774, parameters representative of user views;
- in a register 775, edition parameters.

The algorithms implementing the steps of the method specific to the present disclosure and described above are stored in the memory GRAM 721 of the graphics card 72 associated with the apparatus 7 implementing those steps. When switched on and once the parameters 771, 772 and 773, and possibly 774 and 775 (in case of automatic edits and focus on user view) are loaded into the RAM 77, the key views 24A, 24B are extracted and their edited versions 27A, 27B are obtained. The graphic processors 720 of graphics card 72 load the appropriate information and parameters into the GRAM 721 and execute the instructions of algorithms in the form of microprograms of "shader" type using HLSL (High Level Shader Language) language or GLSL (OpenGL Shading Language) for example. Those algorithms include the edit propagation to the VR scene or user views.

The random access memory GRAM 721 comprises notably:

- in a register 7211, the information representative of the VR scene;
- in a register 7212, parameters representative of the edited key views;
- in a register 7213, the edit propagation parameters;
- in a register 7214, the parameters representative of user views;
- in a register 7215, the information representative of the edited VR scene or edited user views.

In the above embodiment, the GPUs 720 are adapted to proceed with the edit propagation over the VR scene or the user views, and the registers are suited thereto. In variant implementations, the edit propagation is effected in the RAM 77 and retrieved and rendered in the GPUs 720.

As will be understood by a skilled person, the presence of the graphics card 72 is not mandatory, and can be replaced with simpler visualization implementations.

According to another variant, the power supply 78 is external to the apparatus 7.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. All those possibilities are contemplated by the present disclosure.

**Claims**

1.  A device (1A; 1B; 7) for editing a virtual reality scene (21) represented in a curved shape form (3, 4), **characterized in that** said device comprises at least one processor configured for:

    - extracting (11 A; 11 B) at least two planar key views (24A; 24B) from said virtual reality scene (21),
    - obtaining (13; 14) edited versions (27A; 27B) of said planar key views having respective edits,
    - propagating (15A; 15B) said edits of said edited versions of said planar key views to at least part of said virtual reality scene, called a processed area.

2.  The device (1A; 7) according to claim 1, **characterized in that** a union of said planar key views and of said processed area covers entirely said virtual reality scene.

3.  The device (1B; 7) according to claim 1, **characterized in that** said processed area is located within at least one current view (22) available to a user in said virtual reality scene.

4.  The device (1A; 1B; 7) according to any of the preceding claims, **characterized in that** said processed area comprises at least part of said planar key views (24A; 24B).

5.  The device (1A; 1B; 7) according to any of the preceding claims, **characterized in that** said edits correspond to at least one of editing operations among color grading, visual enhancements and special effects.

6.  The device (1A; 1B; 7) according to any of the preceding claims, **characterized in that** said at least one processor is further configured for automatically editing (14) said planar key views.

7.  The device (1A; 1B; 7) according to any of the preceding claims, **characterized in that** at least one of said planar key views has a size based on at least one of a field of view of a human visual system and at least one field of view of respectively at least one display device.

8.  The device (1A; 1B; 7) according to claim 7, **characterized in that** said size corresponds to a minimum of at least two of said fields of view.

9.  The device (1A; 1B; 7) according to any of the preceding claims, **characterized in that** said at least one processor is further configured for extracting said planar key views (24A; 24B) based on a regular sampling (42) of said virtual reality scene (4).

10. The device (1A; 1B; 7) according to any of the preceding claims, **characterized in that** said planar key views (24A; 24B) correspond to a subset of selected planar key views (40), said subset being determined by extracting said planar key views from at least two feature clusters associated with said selected planar key views.

11. The device (1A; 1B; 7) according to any of the preceding claims, **characterized in that** said at least one processor is further configured for extracting said planar key views (24A; 24B) based on at least one level of local information chosen among at least one of local contrast, color information and saliency.

12. The device (1A; 1B; 7) according to any of the preceding claims, **characterized in that** said at least one processor is further configured for extracting said planar key views (24A; 24B) based on a concentration of samples associated with brightness levels in said virtual reality scene (4).

13. The device (1A; 1B; 7) according to any of the preceding claims, **characterized in that** said virtual reality scene being associated with audio signals, said at least one processor is further configured for extracting said planar key views based on sound changes.

14. The device (1A; 1B; 7) according to any of the preceding claims, **characterized in that** said virtual reality scene being subject to movements, said at least one processor is further configured for extracting said planar key views based on movement intensities.

15. A method (6A; 6B) for editing a virtual reality scene (21) represented in a curved shape form (3, 4), **characterized in that** said method comprises:

- extracting (61 A; 61 B) at least two planar key views (24A; 24B) from said virtual reality scene,
- obtaining (63; 64B) edited versions (26A; 26B) of said planar key views having respective edits,
- propagating (65A; 65B) said edits of said edited versions of said planar key views to at least part of said virtual reality scene, called a processed area.

16. The method (6A; 6B) of claim 15, **characterized in that** said method is executed by a device (1A; 1B; 7) according to any of claims 1 to 14.

17. A computer program comprising software code adapted to perform a method (6A; 6B) according to claim 15 or 16 when it is executed by a processor.

**Fig 1**

**Fig 2**

3

30

300

**Fig 3**

31

**Fig 4**

**Fig 5**

**Fig 6A**

**Fig 6B**

**Fig 7**

**Fig 8**

Fig 9

Fig 10

21

VR scene

23

6A

Extraction parameters

61A

Key view extraction

24A

Key views

64A

Key view edition

27A

Edited key views

63

Key view reception

65A

Edit propagation

28A

Edited VR scene

**Fig 11**

6B

21

VR scene

22

User views

23

Extraction
parameters

↓                    ↓                    ↓

Key view extraction — 61B

↓

Selected key views — 24B

↓

Image analysis — 62

↓ — 25

Derived edition
parameters

26

Input edition
parameters

↓                    ↓

Key view edition — 64B

↓

Edited selected key views — 27B

↓

Edit propagation — 65B

↓

Edited user views — 28B

**Fig 12**

7

71 — CPU

76 — ROM

72 — Graphics card

720 — GPUs

721 — GRAM

7211 — VR scene info

7212 — Parameters repres. edited key views

7213 — Edit propagation parameters

7214 — User view parameters

7215 — Info repres. edited VR scene or edited user view

730 — Display

73

74 — I/O devices

79 — RF unit

77 — RAM

Prog — 770

VR scene info — 771

Key view extraction parameters — 772

Edit propagation parameters — 773

User view parameters — 774

Edition parameters — 775

78 — Power supply

75

**Fig 13**

Europäisches
Patentamt

European
Patent Office

Office européen
des brevets

# EUROPEAN SEARCH REPORT

Application Number

EP 17 30 5675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CUONG NGUYEN ET AL: "Vremiere", PROCEEDINGS OF THE 2017 CHI CONFERENCE ON HUMAN FACTORS IN COMPUTING SYSTEMS , CHI '17, ACM PRESS, NEW YORK, NEW YORK, USA, 2 May 2017 (2017-05-02), pages 5428-5438, XP058337745, DOI: 10.1145/3025453.3025675 ISBN: 978-1-4503-4655-9 | 1,15-17 | INV. G06T19/20 G06K9/00 G06T3/00 G11B27/031 G06T11/60 |
| Y | * abstract * * page 5428 - page 5430, left-hand column * | 2-14 | |
| Y | EP 3 023 987 A1 (AXIS AB [SE]) 25 May 2016 (2016-05-25) * abstract * * paragraphs [0005], [0027] - [0034] * | 2-14 | |
| Y | WO 2007/057893 A2 (YISSUM RES DEV CO [IL]; PELEG SHMUEL [IL]; RAV-ACHA ALEXANDER [IL]) 24 May 2007 (2007-05-24) * abstract * * page 3, line 26 - page 5, line 20 * * page 6, lines 13-26 * * page 10, line 26 - page 11, line 18 * | 2-14 | |
| | | | TECHNICAL FIELDS SEARCHED (IPC) |
| Y | LIEN KUO-CHIN ET AL: "High-order regularization for stereo color editing", 2015 IEEE INTERNATIONAL CONFERENCE ON IMAGE PROCESSING (ICIP), IEEE, 27 September 2015 (2015-09-27), pages 1633-1637, XP032826746, DOI: 10.1109/ICIP.2015.7351077 [retrieved on 2015-12-09] * abstract * * page 1634, left-hand column, paragraph 4 - page 1635, right-hand column, paragraph 2 * | 2-14 | G06T G06K G11B |

The present search report has been drawn up for all claims

| Place of search | Date of completion of the search | Examiner |
|---|---|---|
| Munich | 13 October 2017 | Fernández Cuenca, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&.............................................................................

& : member of the same patent family, corresponding
    document

EPO FORM 1503 03.82 (P04C01)

**EP 3 413 270 A1**

## ANNEX TO THE EUROPEAN SEARCH REPORT
## ON EUROPEAN PATENT APPLICATION NO.

EP 17 30 5675

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2017

| Patent document cited in search report | | Publication date | Patent family member(s) | | Publication date |
|---|---|---|---|---|---|
| EP 3023987 | A1 | 25-05-2016 | CN | 105635667 A | 01-06-2016 |
| | | | EP | 3023987 A1 | 25-05-2016 |
| | | | JP | 2016105587 A | 09-06-2016 |
| | | | KR | 20160060553 A | 30-05-2016 |
| | | | TW | 201625010 A | 01-07-2016 |
| | | | US | 2016148649 A1 | 26-05-2016 |
| WO 2007057893 | A2 | 24-05-2007 | AU | 2006314066 A1 | 24-05-2007 |
| | | | BR | PI0620497 A2 | 16-11-2011 |
| | | | CA | 2640834 A1 | 24-05-2007 |
| | | | CN | 101366027 A | 11-02-2009 |
| | | | DK | 1955205 T3 | 15-10-2012 |
| | | | EP | 1955205 A2 | 13-08-2008 |
| | | | JP | 4972095 B2 | 11-07-2012 |
| | | | JP | 2009516257 A | 16-04-2009 |
| | | | KR | 20080082963 A | 12-09-2008 |
| | | | US | 2009219300 A1 | 03-09-2009 |
| | | | US | 2012092446 A1 | 19-04-2012 |
| | | | WO | 2007057893 A2 | 24-05-2007 |

EPO FORM P0459

For more details about this annex : see Official Journal of the European Patent Office, No. 12/82

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. NASREEN ; G. SHOBHA.** Key Frame Extraction from Videos-A Survey. *International Journal of Computer Science & Communication Networks,* 2013